(19) Europäisches Patentamt
European Patent Office
Office européen des brevets

(11) **EP 3 092 398 B1**

(12) **FASCICULE DE BREVET EUROPEEN**

(45) Date de publication et mention
de la délivrance du brevet:
**10.10.2018 Bulletin 2018/41**

(21) Numéro de dépôt: **14831039.4**

(22) Date de dépôt: **30.12.2014**

(51) Int Cl.:
*F02K 9/48* (2006.01)      *F02K 9/56* (2006.01)
*F02K 9/58* (2006.01)

(86) Numéro de dépôt international:
**PCT/FR2014/053574**

(87) Numéro de publication internationale:
**WO 2015/104477 (16.07.2015 Gazette 2015/28)**

(54) **PROCÉDÉ DE COMMANDE D'ENSEMBLE PROPULSIF**

VERFAHREN ZUR STEUERUNG EINES ANTRIEBSSYSTEMS

METHOD FOR CONTROLLING A PROPULSION SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.01.2014 FR 1450167**

(43) Date de publication de la demande:
**16.11.2016 Bulletin 2016/46**

(73) Titulaire: **ArianeGroup SAS**
**75015 Paris (FR)**

(72) Inventeur: **LE BOUAR, Gaëlle**
**F-27950 Saint-Marcel (FR)**

(74) Mandataire: **Calvo de Nó, Rodrigo et al**
**Cabinet Beau de Loménie**
**158, rue de l'Université**
**75340 Paris Cedex 07 (FR)**

(56) Documents cités:
**FR-A1- 2 699 602      FR-A1- 2 992 364
US-A- 5 267 437      US-B1- 8 250 853**

## Description

### Arrière-plan de l'invention

La présente invention concerne un procédé de commande d'un ensemble propulsif, et plus particulièrement d'un moteur-fusée du type dit de cycle « expander », ou cycle à détente, tel ceux décrits dans FR 2 992 364 A1 ou US 5,267,437, dans lequel une détente partielle d'au moins un ergol, après son réchauffement par une chaleur de combustion et avant son injection dans une chambre propulsive, sert à actionner une turbine couplée à une pompe d'ergol pour assurer la circulation de l'ergol vers la chambre propulsive.

Dans la description qui suit, les termes "amont" et "aval" sont définis par rapport au sens de circulation normal d'au moins un ergol pendant le fonctionnement de l'ensemble propulsif.

Un tel ensemble propulsif est un système dynamique avec des retours pouvant provoquer des phénomènes d'instabilité. Ainsi, par exemple, un débit massique d'ergol trop faible au niveau d'une pompe peut provoquer une instabilité mettant en danger le fonctionnement et même l'intégrité physique de l'ensemble propulsif et de son éventuelle charge utile. Cet inconvénient peut notamment empêcher le fonctionnement d'un tel ensemble propulsif en mode de poussée réduite.

### Objet et résumé de l'invention

La présente invention vise à remédier à ces inconvénients. Plus spécifiquement, la présente description vise à proposer un procédé de commande d'un ensemble propulsif, conforme à la revendication 1, et plus spécifiquement d'un ensemble conforme à la revendication 9, qui permette d'éviter une situation d'instabilité. Dans cet ensemble propulsif, au moins une chambre propulsive est alimentée en au moins un premier ergol par une première pompe couplée à une première turbine qui est actionnée par une détente partielle dudit premier ergol en amont de ladite chambre propulsive après son passage, en aval de la première pompe, à travers un échangeur de chaleur chauffé par ladite chambre propulsive.

Dans au moins un mode de réalisation, ce but peut être atteint grâce au fait que le procédé de commande comprend au moins les étapes de détermination d'un risque d'instabilité de l'ensemble propulsif, et délestage d'un débit partiel dudit premier ergol, en réponse à la détermination dudit risque d'instabilité, à travers une dérivation située entre la première turbine et la chambre propulsive.

Grâce à ces dispositions, il est possible d'éviter une instabilité prévue de l'ensemble propulsif en permettant conditionnellement une augmentation du débit d'ergol traversant la première pompe et la première turbine sans augmenter la surpression fournie par la première pompe.

Typiquement, mais pas toujours, de tels ensembles propulseurs sont bi-ergols, c'est-à-dire que la propulsion est assurée par une réaction chimique du premier ergol, dans la chambre propulsive, avec un deuxième ergol. L'alimentation de la chambre propulsive en ce deuxième ergol peut par exemple être assurée par une deuxième pompe, même si des moyens d'alimentation alternatifs ou complémentaires, comme par exemple la pressurisation d'un réservoir du deuxième ergol, sont aussi envisageables par la personne du métier. Afin d'assurer son entraînement, cette deuxième pompe peut être couplée à une deuxième turbine, située par exemple en aval de la première turbine, et actionnée aussi par une détente partielle dudit premier ergol après son réchauffement, en aval de la première pompe, par de la chaleur provenant de ladite chambre propulsive, et avant son injection dans ladite chambre propulsive. Toutefois, des moyens alternatifs ou complémentaires d'entraînement de la deuxième pompe, comme par exemple un entraînement électrique ou un couplage à la première turbine, sont également envisageables par la personne du métier.

Le risque d'instabilité peut notamment être déterminé en fonction d'un coefficient de débit pompe de ladite première pompe, calculé en divisant débit volumique dudit premier ergol impulsé par la première pompe par vitesse angulaire de la première pompe. En particulier, ledit risque d'instabilité peut être déterminé si ledit coefficient de débit pompe de la première pompe est inférieur à un seuil prédéterminé, ce qui indiquerait une proximité à un régime instable. Plusieurs méthodes alternatives d'estimation dudit débit volumique peuvent être appliquées simultanément, de manière à obtenir une redondance dans cette estimation.

Alternativement, toutefois, ledit risque d'instabilité peut être déterminé suivant un critère d'instabilité calculé en fonction d'au moins un paramètre physique.

L'invention concerne également un support de mémoire informatique comprenant un ensemble d'instructions pour la mise en oeuvre de ce procédé de commande par une unité de commande connectée au moins à ladite vanne de dérivation. On entend par « support de mémoire informatique » tout support d'information pouvant être lu par un dispositif informatique, et en particulier un dispositif informatique électronique. Ainsi, on peut compter parmi les supports de mémoire informatique les supports magnétiques, tels que bandes et disques magnétiques, les supports optiques, tels que les disques optiques, ou les supports électroniques, tels que les mémoires électroniques volatiles ou non-volatiles.

L'invention concerne également les ensembles propulsifs. En particulier, suivant au moins un mode de réalisation, un tel ensemble propulsif peut comprendre au moins une chambre propulsive, une première pompe pour alimenter ladite chambre propulsive en un premier ergol, un échangeur de chaleur connecté à la première pompe en amont et apte à être chauffé par ladite chambre propulsive, une première turbine couplée à la première pompe, apte à être actionnée par une détente partielle dudit premier ergol, et connectée à l'échangeur de chaleur en amont et à la chambre propulsive en aval, une dérivation située entre la première turbine et la chambre propulsive, et une unité de commande connectée au moins à une vanne de dérivation située sur cette dérivation, et configurée pour déterminer un risque d'instabilité de l'ensemble propulsif et commander l'ouverture de ladite vanne de dérivation pour un délestage d'un débit partiel dudit premier ergol à travers ladite dérivation, en réponse à la détermination dudit risque d'instabilité.

## Brève description des dessins

L'invention sera bien comprise et ses avantages apparaîtront mieux, à la lecture de la description détaillée qui suit, de deux modes de réalisation représentés à titre d'exemples non limitatifs. La description se réfère aux dessins annexés sur lesquels :

-   la figure 1 illustre schématiquement un lanceur spatial multi-étages ;
-   la figure 2 illustre schématiquement un ensemble propulsif suivant un mode de réalisation de l'invention ;
-   la figure 3 est une courbe illustrant l'évolution d'un rapport entre un coefficient de débit pompe et un coefficient réduit de surpression totale pompe d'une première pompe dudit ensemble propulsif ;
-   les figures 4A et 4B illustrent, respectivement, l'évolution de la pression de sortie de pompe et du débit fournis par ladite première pompe dans une situation d'instabilité ; et
-   les figures 5A et 5B illustrent, respectivement, l'évolution de la pression de sortie de pompe et du débit fournis par ladite première pompe dans une situation analogue, dans laquelle l'instabilité est toutefois évitée par le procédé de commande suivant un mode de réalisation.

## Description détaillée de l'invention

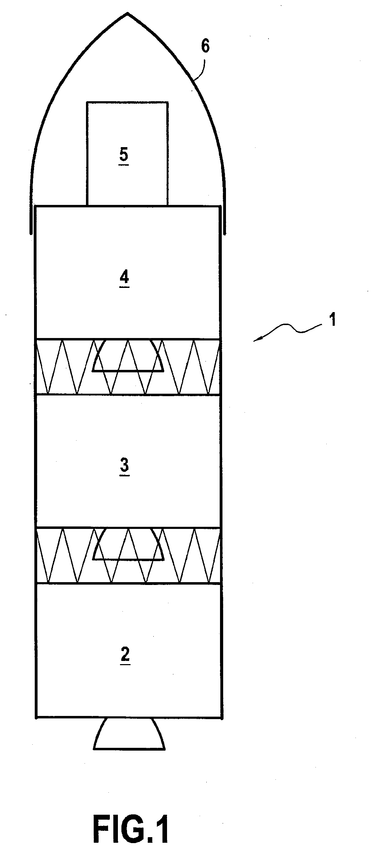

Un lanceur spatial multi-étages 1 est illustré schématiquement sur la figure 1. Le lanceur 1 illustré comprend trois étages successifs 2,3,4, et une charge utile 5, comme par exemple un satellite, sous une coiffe 6 fixée de manière libérable sur le dernier des trois étages. Chacun des trois étages 2,3,4 comprend un ensemble propulsif de type moteur-fusée, permettant ainsi le lancement et mise en orbite de la charge utile 5. Pour cela, les ensembles propulsifs des trois étages 2,3,4 sont mis à feu successivement, avec séparation de chaque étage épuisé avant la mise à feu de l'ensemble propulsif de l'étage suivant.

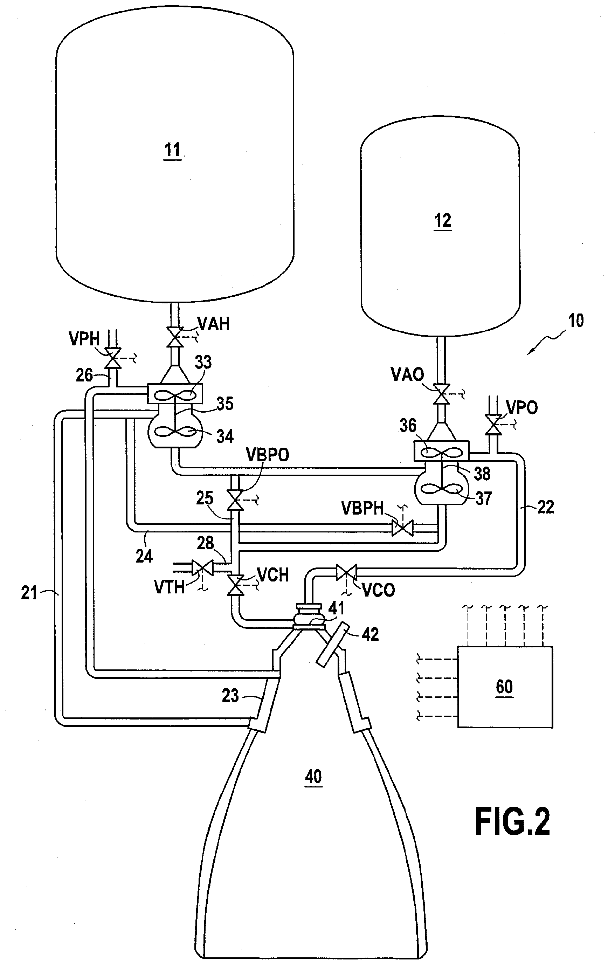

La figure 2 illustre un ensemble propulsif 10 suivant un premier mode de réalisation. Cet ensemble propulsif 10 pourrait équiper l'un quelconque des étages d'un tel lanceur spatial, ou même un engin spatial lancé comme charge utile sur un tel lanceur spatial. L'ensemble propulsif 10 illustré est un moteur-fusée de cycle « expander », c'est-à-dire, un moteur-fusée à ergols liquides et alimentation par turbopompe, dans lequel la turbopompe est actionnée par détente d'un des ergols après son réchauffage et sa vaporisation dans un échangeur de chaleur régénératif chauffé par la chambre propulsive.

L'ensemble propulsif 10 illustré comprend un premier réservoir 11, apte à contenir un premier ergol, un deuxième réservoir 12, apte à contenir un deuxième ergol, un premier circuit d'alimentation 21, un deuxième circuit d'alimentation 22, une première turbopompe TPH, une deuxième turbopompe TPO et une chambre propulsive 40. La première turbopompe TPH comprend une pompe 33 et une turbine 34 couplées en rotation par un arbre rotatif commun 35. La deuxième turbopompe TPO comprend aussi une pompe 36 et une turbine 37 couplées en rotation par un arbre rotatif commun 38. Typiquement, le premier et le deuxième ergol sont des ergols cryogéniques, et plus spécifiquement de l'hydrogène et de l'oxygène liquides, respectivement.

Le premier circuit d'alimentation 21, qui est connecté en amont au premier réservoir 11, traverse successivement la pompe 33 de la première turbopompe TPH, un échangeur de chaleur 23 intégré dans une paroi externe de la chambre propulsive 40, la turbine 34 de la première turbopompe TPH et la turbine 37 de la deuxième turbopompe TPO avant de déboucher dans un dispositif 41 d'injection dans la chambre propulsive 40. Ce premier circuit d'alimentation 21 comprend aussi une première ligne de contournement 24 contournant les turbines 34 et 37, une deuxième ligne de contournement 25 contournant la turbine 37, une première dérivation 26, située entre la pompe 33 et l'échangeur de chaleur 22 et connectée à une ligne de purge, et une deuxième dérivation 28, située entre la turbine 37 et le dispositif d'injection 41, et pouvant être reliée à un circuit de pressurisation autogène (non-illustré) du premier réservoir 11.

Afin de réguler le débit d'ergol à travers le premier circuit d'alimentation 21, celui-ci comprend aussi une vanne d'alimentation VAH directement en aval du premier réservoir 11, une première vanne de contournement VBPH dans la première ligne de contournement 23, une deuxième vanne de contournement VBPO dans la deuxième ligne de contournement 24, une vanne VCH directement en amont du dispositif d'injection 41, une vanne de purge VPH située sur la première dérivation 26, et une vanne de dérivation VTH située sur la deuxième dérivation 28. Toutes ces vannes sont connectées, pour leur commande, à une unité de commande 60, qui peut notamment être une unité électronique programmable, comprenant ainsi au moins un processeur électronique connecté à un support informatique comprenant un ensemble d'instructions pour la mise en oeuvre d'un procédé de commande par l'unité de commande 60.

Le deuxième circuit d'alimentation 22, qui est connecté en amont au deuxième réservoir 12, traverse la pompe 36 de la deuxième turbopompe TPO avant de déboucher aussi dans le dispositif 41 d'injection dans la chambre propulsive 40. Ce deuxième circuit d'alimentation 22 comprend une dérivation connectée à une ligne de purge. Afin de contribuer à réguler le débit d'ergol à travers le deuxième circuit d'alimentation 22, celui-ci comprend aussi une vanne d'alimentation VAO directement en aval du deuxième réservoir 12, une autre vanne VCO directement en amont du dispositif d'injection 41, et une vanne de purge VPO située sur la dérivation. Ces autres vannes VAO, VCO et VPO sont aussi connectées à l'unité de commande 60, tout comme par ailleurs un dispositif d'allumage 42 dans la chambre propulsive 40, un capteur de température T du fluide traversant la pompe 33, un capteur de vitesse angulaire $\omega$ de la pompe 33, des capteurs de pression en entrée et sortie de la pompe 33, respectivement, et éventuellement un débitmètre pour mesurer le débit massique Q de fluide traversant la pompe 33.

Afin de démarrer cet ensemble propulsif, on procède d'abord à la mise en froid des circuits d'alimentation 21, 22. Pour cela, avec les vannes de purge VPH, VPO, ainsi que les vannes de contournement VBPH, VBPO, ouvertes, on procède à ouvrir graduellement les vannes d'alimentation VAH, VAO, tout en maintenant les vannes VCH, VCO, directement en amont de la chambre propulsive 40, fermées. Les ergols entrent ainsi dans les circuits d'alimentation 21, 22, empêchant un choc thermique soudain, et assurant la purge d'autres substances dans les circuits 21,22 avant le démarrage. Ensuite, les vannes VCH, VCO sont ouvertes et, après l'arrivée d'une quantité suffisante d'ergols dans la chambre propulsive 40 à travers le dispositif d'injection 41, le dispositif d'allumage 42 est activé afin d'allumer le mélange d'ergols dans la chambre propulsive 40. Après cet allumage les vannes de purge VPH, VPO sont fermées, et la chaleur générée par la combustion du mélange d'ergols dans la chambre propulsive 40 commence à chauffer le premier ergol pendant son passage à travers l'échangeur de chaleur 23. Les vannes de contournement VBPH VBPO sont alors progressivement fermées pour diriger cet ergol chaud à travers les turbines 34, 37, de manière à assurer l'entraînement des turbopompes TPH, TPO par une détente partielle de ce premier ergol dans les turbines 34, 37. Le degré d'ouverture des vannes de contournement VBPH, VBPO peut ensuite servir à réguler le régime de l'ensemble propulsif 10, bien que d'autres moyens, comme par exemple des dispositifs de freinage (non illustrés) des turbopompes TPH, TPO, ou l'ouverture des vannes de purge VPH, VPO, peuvent également être utilisés dans ce but.

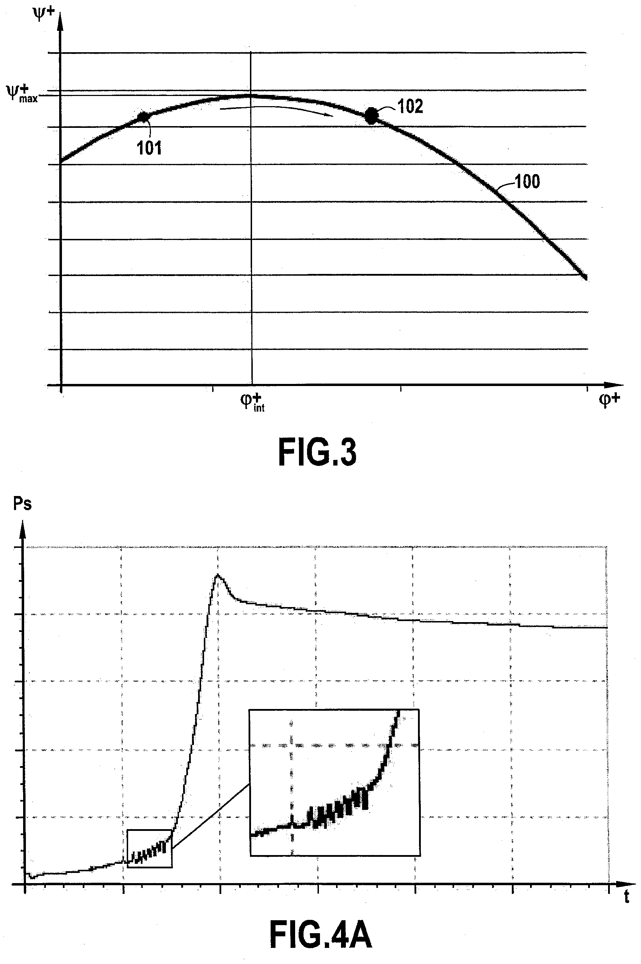

Un inconvénient, toutefois, d'une telle régulation de régime, est que dans certaines régions de fonctionnement, notamment à des régimes de poussée restreinte, quand le débit d'ergol fourni par la première pompe est comparativement bas par rapport à la surpression fournie par cette première pompe, le fonctionnement de la turbopompe peut devenir instable. La figure 3 illustre une courbe 100 caractéristique de la turbopompe TPH, dans laquelle l'axe vertical correspond aux valeurs d'un coefficient réduit $\psi^+$ de surpression totale de la pompe 33, et l'axe horizontal à celles d'un coefficient $\varphi^+$ de débit de la pompe 33.

Le coefficient $\psi^+$ correspond à la différence $\Delta p$ entre la pression de sortie $p_s$ et la pression d'entrée $p_e$ de la pompe 33, divisée par la masse volumique $p$ du premier ergol en traversant cette pompe 33 et le carré de la vitesse angulaire $\omega$ de la pompe 33, suivant la formule :

$$\psi^+ = \frac{p_s - p_e}{\rho \cdot \omega^2}$$

Pour sa part, le coefficient $\varphi^+$ correspond au débit volumique fourni par cette même pompe 33, c'est-à-dire son débit massique Q divisé par la masse volumique $\rho$ susmentionnée, divisé par ladite vitesse angulaire $\omega$, suivant la formule :

$$\varphi^+ = \frac{Q}{\rho \cdot \omega}$$

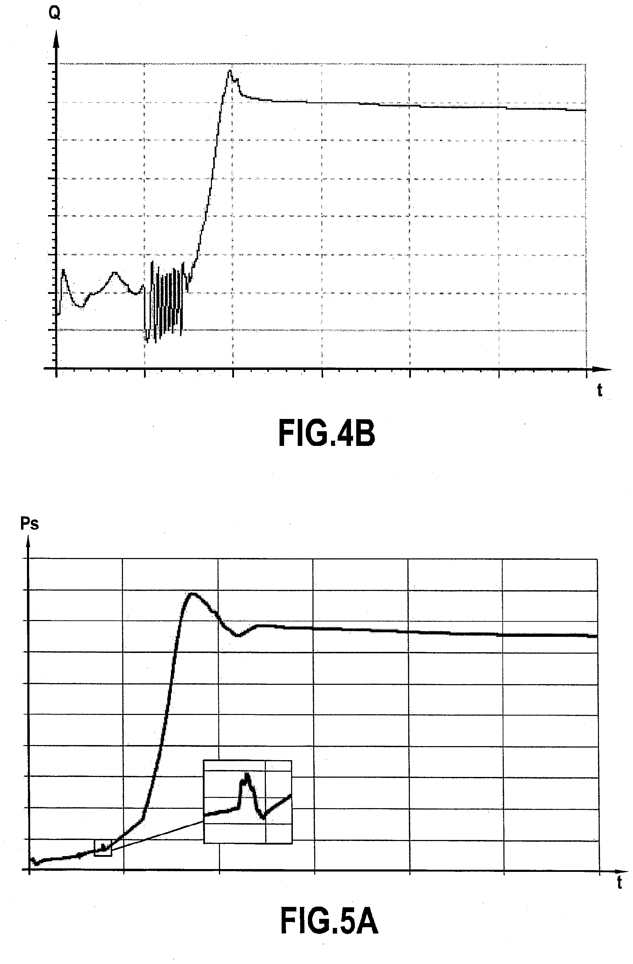

Comme on peut apprécier sur la figure 3, le coefficient réduit de surpression $\psi^+$ augmente initialement avec une croissance du coefficient de débit $\varphi^+$, atteint une valeur maximale $\psi^+_{max}$ correspondant à une valeur critique $\varphi^+_{crit}$ du coefficient de débit $\varphi^+$, et descend ensuite, avec un coefficient de débit $\varphi^+$ augmentant au-delà de la valeur critique $\varphi^+_{crit}$. En conséquence, quand le coefficient de débit $\varphi^+$ est supérieur à $\varphi^+_{crit}$, la turbopompe TPH fonctionne dans un régime naturellement stable, tandis que quand le coefficient de débit $\varphi^+$ est inférieur à la valeur critique $\varphi^+_{crit}$ la réponse du circuit d'alimentation 21 peut être telle que la turbopompe TPH entre dans un régime instable se manifestant par des oscillations sensibles dans la pression de sortie $p_s$ et le débit massique Q fournis par la pompe 33, comme illustré, respectivement, sur les figures 4A et 4B.

Comme on peut apprécier sur la figure 3, on peut passer d'un point 101 dans la zone d'instabilité à un point 102 dans la zone de stabilité, avec un même coefficient réduit de surpression $\psi^+$, en augmentant le coefficient de débit $\varphi^+$. En conséquence, un délestage partiel en aval de la turbine 34, en augmentant le débit Q, peut permettre d'éviter une situation d'instabilité. Un tel délestage peut notamment être obtenu en ouvrant la vanne de dérivation VTH, permettant l'échappement d'une partie du débit total du premier ergol pompé par la turbopompe TPH, en réponse à la détermination d'un risque d'instabilité.

Suivant un premier mode de réalisation, le risque d'instabilité est déterminé par l'unité de commande 60 si le coefficient de débit $\varphi^+$ de la pompe 33 est inférieur à un seuil prédéterminé $\varphi^+_{lim}$, égal ou supérieur à la valeur critique $\varphi^+_{crit}$. Plus spécifiquement, ledit seuil prédéterminé $\varphi^+_{crit}$ peut être égal à la somme de cette valeur critique plus une marge de sécurité prédéterminée pour tenir compte des tolérances de fabrication et autres dispersions matérielles.

Le coefficient de débit $\varphi^+$ peut notamment être calculé par l'unité de commande 60 en fonction de paramètres captés par les capteurs, y compris le débitmètre. Le débit massique Q ou volumique Q/p pourvu par la pompe 33 peut être mesuré directement par le débitmètre, ou plutôt, en particulier en absence d'un tel débitmètre, indirectement à travers les données de pression $p_e$ et $p_s$, température T et vitesse angulaire $\omega$ recueillies à travers les capteurs correspondants, et une fonction caractéristique de la pompe 33 mettant en relation ces paramètres physiques de la pompe 33 en fonctionnement avec le débit massique ou volumique qu'elle fournit.

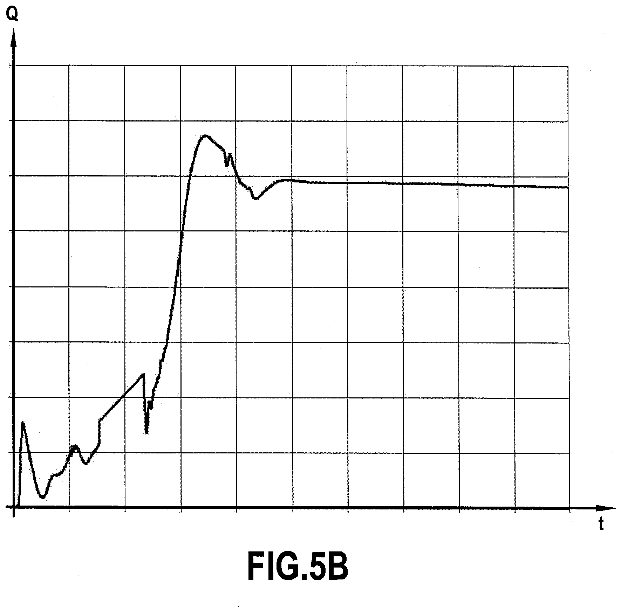

En réponse à une telle détermination de risque d'instabilité, l'unité de commande 60 émet donc une commande d'ouverture de la vanne de dérivation VTH, augmentant ainsi le débit massique et volumique de la pompe 33, son coefficient de débit $\varphi^+$, et évitant ainsi l'instabilité de la turbopompe TPH. Les figures 5A et 5B illustrent l'évolution de la pression de sortie $p_s$ et du débit massique Q, dans des circonstances analogues à celles des figures 4A et 4B, quand ce procédé est mis en oeuvre, ouvrant la vanne de dérivation VTH en réponse à la détermination du risque d'instabilité. On peut y apprécier comment on évite ainsi des oscillations sensibles de ces deux paramètres.

Bien que, dans ce premier mode de réalisation, le critère servant à déterminer le risque d'instabilité soit le coefficient de débit $\varphi^+$, d'autres critères peuvent être utilisés alternativement ou en complément à celui-ci. Ainsi, dans un deuxième mode de réalisation, ce critère peut être une probabilité d'instabilité suivant un modèle prédictif d'instabilité de la turbopompe TPH. Ce modèle prédictif d'instabilité peut avoir été développé sur base d'un plan d'expérience intégrant plusieurs séquences différentes de démarrage. A partir de ce plan d'expérience, on aurait identifié au moins un paramètre physique lié au risque d'instabilité, et calculé la probabilité d'instabilité en fonction de cet au moins un paramètre physique. Ainsi, par exemple, la probabilité d'instabilité de la turbopompe pourrait être exprimée comme une fonction $f((\omega, Q, p_s)$ de la vitesse angulaire $\omega$, débit massique Q et température T mesurés, directement ou indirectement, à travers les capteurs, y compris le débitmètre. Le risque d'instabilité déclenchant le délestage en aval des turbines 34, 37 peut alors être déterminé si cette probabilité dépasse un seuil de probabilité $f_{limit}$ acceptable prédéterminé.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. Ainsi, bien que dans le mode de réalisation illustré, l'ensemble propulsif ne comprenne qu'une seule chambre propulsive, dans des modes de réalisation alternatifs, l'ensemble propulsif pourrait comporter une pluralité de chambres propulsives alimentés chacune, par exemple, par sa propre paire de turbopompes. En outre, bien que dans le mode de réalisation illustré l'ensemble propulsif comprenne une turbopompe par ergol, il est également possible, dans d'autres modes de réalisation, d'utiliser une turbine commune pour l'entraînement des deux pompes, ou même d'utiliser un autre procédé d'alimentation pour le deuxième ergol. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

**Revendications**

1. Procédé de commande d'un ensemble propulsif (10) dans lequel au moins une chambre propulsive (40) est alimentée en au moins un premier ergol par une première pompe (33) couplée à une première turbine (34) qui est actionnée par une détente partielle dudit premier ergol en amont de ladite chambre propulsive (40) après son passage, en aval de la première pompe (33), à travers un échangeur de chaleur (23) chauffé par ladite chambre propulsive (40), le procédé étant **caractérisé en ce qu'**il comprend les étapes de :

   détermination d'un risque d'instabilité de l'ensemble propulsif (10) ; et
   délestage d'un débit partiel dudit premier ergol, en réponse à la détermination dudit risque d'instabilité, à travers une dérivation (28) située entre la première turbine (34) et la chambre propulsive (40).

2. Procédé de commande suivant la revendication 1, dans lequel ladite chambre propulsive (40) est alimentée en un deuxième ergol par une deuxième pompe (36).

3. Procédé de commande suivant la revendication 2, dans lequel ladite deuxième pompe (36) est couplée à une deuxième turbine (37) qui est actionnée aussi par une détente partielle dudit premier ergol après son passage par l'échangeur de chaleur (23).

4. Procédé de commande suivant la revendication 3, dans lequel ladite deuxième turbine est située en aval de la première turbine.

5. Procédé de commande suivant l'une quelconque des revendications précédentes, dans lequel ledit risque d'instabilité est déterminé en fonction d'un coefficient de débit pompe ($\varphi^+$) de ladite première pompe (33), calculé en divisant un débit volumique dudit premier ergol impulsé par la première pompe (33) par une vitesse angulaire de la première pompe (33).

6. Procédé de commande suivant la revendication 5, dans lequel le débit volumique du premier ergol impulsé par la première pompe (33) est estimé indirectement à travers de paramètres physiques autres que ledit débit volumique du premier ergol.

7. Procédé de commande suivant l'une quelconque des revendications 5 ou 6, dans lequel ledit risque d'instabilité est déterminé si ledit coefficient de débit pompe ($\varphi^+$) de la première pompe (33) est inférieur à un seuil prédéterminé.

8. Procédé de commande suivant l'une quelconque des revendications 1 à 4, dans lequel ledit risque d'instabilité est déterminé suivant un critère d'instabilité calculé en fonction d'au moins un paramètre physique.

9. Ensemble propulsif (10) comprenant au moins :

   une chambre propulsive (40) ;
   une première pompe (33) pour alimenter ladite chambre propulsive (40) en un premier ergol ;
   un échangeur de chaleur (23) connecté à la première pompe (33) en amont et apte à être chauffé par ladite chambre propulsive (40) ;
   une première turbine (34) couplée à la première pompe (33), apte à être actionnée par une détente partielle dudit premier ergol, et connectée à l'échangeur de chaleur (23) en amont et à la chambre propulsive (40) en aval ;
   une dérivation (28) située entre la première turbine (34) et la chambre propulsive (40) ; et
   une unité de commande (60) connectée au moins à une vanne de dérivation (VTH) située sur ladite dérivation (28) ;

   l'ensemble propulsif (10) étant **caractérisé en ce que** l'unité de commande (60) est configurée pour déterminer un risque d'instabilité de l'ensemble propulsif, et commander l'ouverture de ladite vanne de dérivation (VTH) pour un délestage d'un débit partiel dudit premier ergol à travers ladite dérivation (28), en réponse à la détermination dudit risque d'instabilité.

10. Support informatique comprenant un ensemble d'instructions qui, lorsqu'elles sont exécutées par une unité de commande, mettent en oeuvre un procédé de commande suivant l'une quelconque des revendications 1 à 8 par ladite unité de commande (60) lorsqu'elle est connectée au moins à une vanne de dérivation (VTH) située sur ladite dérivation (28).

**Patentansprüche**

1. Verfahren zur Steuerung einer Antriebseinheit (10), wobei mindestens eine Antriebskammer (40) mit mindestens einem ersten Treibstoff durch eine erste Pumpe (33) versorgt wird, welche mit einer ersten Turbine (34) gekoppelt ist, die durch eine teilweise Entspannung des ersten Treibstoffs stromaufwärts von der Antriebskammer (40) nach seinem Hindurchgehen stromabwärts von der Pumpe (33) über einen Wärmetauscher (23), der von der Antriebskammer (40) erhitzt wird, getrieben wird, wobei das Verfahren **dadurch gekennzeichnet ist, dass** es die Schritte umfasst:

   Bestimmen eines Instabilitätsrisikos der Antriebseinheit (10), und
   Entlasten eines teilweisen Durchsatzes des ersten Treibstoffs in Erwiderung auf das Bestimmen des Instabilitätsrisikos, über eine Abzweigung (28), die zwischen der ersten Turbine (34) und der Antriebskammer (40) angeordnet ist.

2. Steuerverfahren nach Anspruch 1, wobei die Antriebskammer (40) mit einem zweiten Treibstoff von einer zweiten Pumpe (36) versorgt wird.

3. Steuerverfahren nach Anspruch 2, wobei die zweite Pumpe (36) mit einer zweiten Turbine (37) gekoppelt ist, die auch durch eine teilweise Entspannung des ersten Treibstoffs nach seinem Hindurchgehen durch den Wärmetauscher (23) betätigt wird.

4. Steuerverfahren nach Anspruch 3, wobei die zweite Turbine stromabwärts von der ersten Turbine angeordnet ist.

5. Steuerverfahren nach einem der vorhergehenden Ansprüche, wobei das Instabilitätsrisiko als Funktion eines Koeffizienten des Pumpendurchsatzes ($\varphi^+$) der ersten Pumpe (33) bestimmt wird, der berechnet wird, indem ein volumetrischer Durchsatz des ersten Treibstoffs, der von der ersten Pumpe (33) Impuls erhält, durch eine Winkelgeschwindigkeit der ersten Pumpe (33) geteilt wird.

6. Steuerverfahren nach Anspruch 5, wobei der volumetrische Durchsatz des ersten Treibstoffs, der von der ersten Pumpe (33) ausgestoßen wird, indirekt durch andere physikalische Parameter geschätzt wird als den volumetrischen Durchsatz des ersten Treibstoffs.

7. Steuerverfahren nach einem der Ansprüche 5 oder 6, wobei das Instabilitätsrisiko bestimmt wird, wenn der Koeffizient des Pumpendurchsatzes ($\varphi^+$) der ersten Pumpe (33) kleiner ist als eine vorherbestimmte Schwelle.

8. Steuerverfahren nach einem der Ansprüche 1 bis 4, wobei das Instabilitätsrisiko gemäß einem Instabilitätskriterium bestimmt wird, das als Funktion mindestens eines physikalischen Parameters berechnet wird.

9. Antriebseinheit (10), umfassend mindestens:

eine Antriebskammer (40),
eine erste Pumpe (33) zur Versorgung der Antriebskammer (40) mit einem ersten Treibstoff,
einen Wärmetauscher (23), der mit der ersten Pumpe (33) stromaufwärts verbunden ist und geeignet ist, von der Antriebskammer (40) erhitzt zu werden,
eine erste Turbine (34), die mit der ersten Pumpe (33) gekoppelt ist, geeignet, durch eine teilweise Entspannung des ersten Treibstoffs getrieben zu werden, und die mit dem Wärmetauscher (23) stromaufwärts und mit der Antriebskammer (40) stromabwärts verbunden ist,
eine Abzweigung (28), die zwischen der ersten Turbine (34) und der Antriebskammer (40) angeordnet ist, und
eine Steuereinheit (60), die mit mindestens einem Abzweigungsventil (VTH) verbunden ist, das an der Abzweigung (28) angeordnet ist,
wobei die Antriebseinheit (10) **dadurch gekennzeichnet ist, dass** die Steuereinheit (60) ausgelegt ist, ein Instabilitätsrisiko der Antriebseinheit zu bestimmen, und das Öffnen des Abzweigungsventils (VTH) für eine Entlastung eines teilweisen Durchsatzes des ersten Treibstoffs über die Abzweigung (28) in Erwiderung auf die Bestimmung des Instabilitätsrisikos zu steuern.

10. Informationsträger, umfassend eine Gruppe von Instruktionen, die, wenn sie von einer Steuereinheit ausgeführt werden, ein Steuerverfahren nach einem der Ansprüche 1 bis 8 durch die Steuereinheit (60) durchführen, wenn diese mit mindestens einem Abzweigungsventil (VTH) verbunden ist, das an der Abzweigung (28) angeordnet ist.

**Claims**

1. A control method for controlling a propulsion assembly (10) in which at least one propulsion chamber (40) is fed with at least a first propellant by a first pump (33) coupled to a first turbine (34) that is driven by partial expansion of said first propellant upstream from said propulsion chamber (40) after passing, downstream from the first pump (33), through a heat exchanger (23) heated by said propulsion chamber (40), the method being **characterized in that** it comprises the steps of:

. determining whether there exists a risk of instability for the propulsion assembly (10); and
. in response to determining that said risk of instability exists, using a branch connection (28) situated between the first turbine (34) and the propulsion chamber (40) to shed a portion of said first propellant.

2. A control method according to claim 1, wherein said propulsion chamber (40) is fed with a second propellant by a second pump (36).

3. A control method according to claim 2, wherein said second pump (36) is coupled to a second turbine (37) that is also actuated by partial expansion of said first propellant after it has passed through the heat exchanger (23) .

4. A control method according to claim 3, wherein said second turbine is situated downstream from the first turbine.

5. A control method according to any preceding claim, wherein said risk of instability is determined as a function of a pump flow rate coefficient ($\varphi^+$) of said first pump (33), calculated by dividing a volume flow rate of said first propellant driven by the first pump (33) by an angular velocity of the first pump (33).

6. A control method according to claim 5, wherein the volume flow rate of the first propellant driven by the first pump (33) is estimated indirectly on the basis of physical parameters other than said volume flow rate of the first propellant.

7. A control method according to claim 5 or claim 6, wherein it is determined there is a risk of instability if said pump flow rate coefficient ($\varphi^+$) of the first pump (33) is less than a predetermined threshold.

8. A control method according to any one of claims 1 to 4, wherein said risk of instability is determined in application of an instability criterion calculated as a function of at least one physical parameter.

9. A propulsion assembly (10) comprising at least:

• a propulsion chamber (40);
• a first pump (33) for feeding said propulsion chamber (40) with a first propellant;
• a heat exchanger (23) connected upstream to the first pump (33) and suitable for being heated by said propulsion chamber (40);

• a first turbine (34) coupled to the first pump (33) and suitable for being driven by partial expansion of said first propellant, and connected upstream to the heat exchanger (23) and downstream to the propulsion chamber (40);

• a branch connection (28) situated between the first turbine (34) and the propulsion chamber (40); and

• a control unit (60) connected to at least one branch connection valve (VTH) situated on said branch connection (28);

the propulsion assembly (10) being **characterized in that** the control unit (60) is configured to determine whether there is a risk of instability for the propulsion assembly, and to cause said branch connection valve (VTH) to be opened to shed a portion of the flow of said first propellant via said branch connection (28) in response to determining that said risk of instability exists.

10. A data medium including a set of instructions which, when executed by a control unit, perform a control method according to any one of claims 1 to 8 by means of said control unit (60) when it is connected to at least one branch connection valve (VTH) situated on said branch connection (28).

FIG.1

FIG.2

FIG.3

FIG.4A

**FIG.4B**

**FIG.5A**

12

**FIG.5B**

## RÉFÉRENCES CITÉES DANS LA DESCRIPTION

**Documents brevets cités dans la description**

- FR 2992364 A1

- US 5267437 A